# EUROPEAN PATENT APPLICATION

(11) **EP 2 574 067 A1**
(43) Date of publication of application: **27.03.2013**
(21) Application number: 11783437.4
(22) Date of filing: 11.05.2011
(51) Int. Cl.: H04N 13/04, G09G 5/00, G09G 5/36

(54) **DATA TRANSMISSION SYSTEM**

(30) Priority: 18.05.2010 JP 2010114654
(71) Applicant: Sony Corporation, Tokyo 108-0075 (JP)
(72) Inventor: YAMAGUCHI Hidetoshi, Tokyo 108-0075 (JP)
(74) Representative: Turner, James Arthur
(86) International application number: PCT/JP2011/060873
(87) International publication number: WO 2011/145503

(57) **Abstract**

Even if three-dimensional image data is output from each of a plurality of devices connected hierarchically, each of the three-dimensional image data is not displayed on a display means with an unnatural stereoscopic effect, but is displayed in an appropriately superimposed manner. A first device (for example, a player 30) outputs a first three-dimensional image data (for example, an OSD data) and first parallax information that is on the first three-dimensional image data. A second device (for example, an AV amplifier 20) is connected to the first device, receives the first three-dimensional image data and the first parallax information from the first device, and outputs the first three-dimensional image data and a second three-dimensional image data. The second device variably controls the second three-dimensional image data based on the first parallax information and second parallax information that is on the second three-dimensional image data.

## Description

### TECHNICAL FIELD

The present invention relates to a data transmission system performing transmission of three-dimensional image data between a plurality of devices connected hierarchically.

### BACKGROUND ART

A glass-type three-dimensional display has been known in the past, in which a viewer is allowed to wear special glasses for stereoscopy utilizing polarization of light and/or a liquid crystal shutter so that different images having parallax are seen to two eyes of the viewer, thereby stereoscopic vision is achieved. In addition, a three-dimensional display of a parallax barrier type or a lenticular type has been known as an example of a three-dimensional display system that allows stereoscopic vision with naked eyes without need of wearing special glasses. At least two parallax images including a left-eye image and a right-eye image are necessary since different images are necessary to be seen to left and right eyes in order to achieve stereoscopic vision. For example, in the glass-type three-dimensional display, left-eye images and right-eye images are time-divisionally and alternately displayed on a two-dimensional display panel such as a liquid crystal display panel. In addition, liquid crystal shutters for left and right eyes of shutter glasses are controlled to be alternately on or off (opened or closed) in synchronization with display timing of the display panel, thereby stereoscopic vision is achieved. In recent years, a consumer TV (television) apparatus enabling such three-dimensional display has been actually released.

On the other hand, recently, HDMI (High Definition Multimedia Interface) has been widely used as a digital interface for transmission of images and/or sound. In a typical interface, a plurality of connection cables for video, audio, and control, for example, have been necessary to be used for connection between two devices. In HDMI, only one cable is necessary, and a control signal supports bidirectional transmission. Thus, for example, the control signal is relayed to STB (Set Top Box) connected from a monitor through an HDMI cable or an output unit such as a DVD player, enabling the whole AV system such as a home theater to be operated by one remote control.

In HDMI, CEC (Consumer Electronics Control) is defined as a control protocol for performing control between devices (see non-patent literature 1). The CEC enables various types of control based on a specific physical address and a specific logical address assigned to each device existing on an HDMI network. For example, in the case where TV is connected to a DVD player through the HDMI network, menu manipulation with OSD (On-Screen Display) for each of the TV and the DVD player and ON/OFF operation of a power source can be collectively performed through a remote control of the TV.

### [Citation List]

### [Patent Literature]

[PTL 1] Japanese Unexamined Patent Application Publication No. 2003-111101.
[PTL 2] Japanese Unexamined Patent Application Publication No. 2005-6114.

### [Non-Patent Literature]

[NPL 1] High-Definition Multimedia Interface Specification Version 1.3a, November 10 2006.

### SUMMARY OF THE INVENTION

In HDMI, a plurality of devices are hierarchically connected through a HDMI cable, and an upper-layer device can collectively control lower-layer devices with the CEC protocol. For example, if an AV amplifier is connected to TV through the HDMI cable, and if a player device such as a DVD player and/or a recorder device such as a DVD recorder are connected to the AV amplifier, TV is set as a highest-layer root device. In this case, the AV amplifier is a first hierarchy device, and the player and the recorder are each a second hierarchy device with respect to the TV.

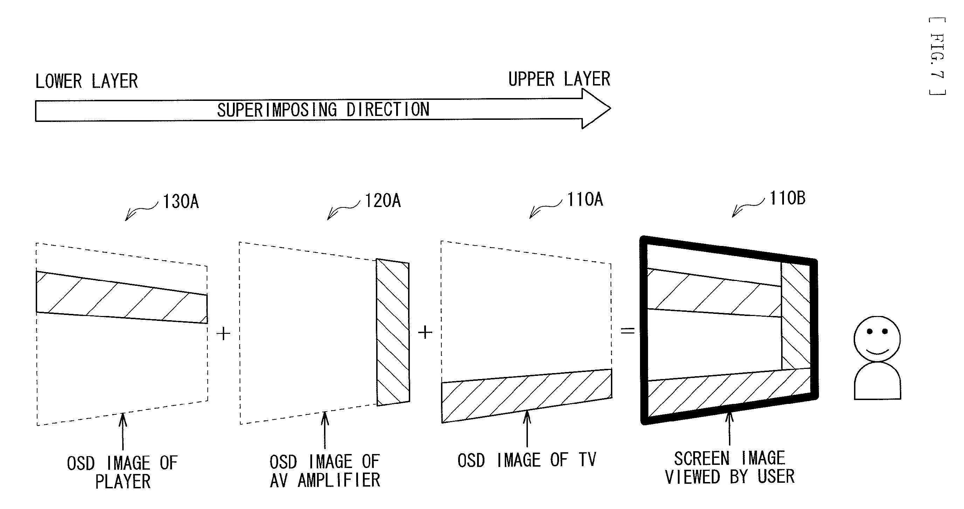

FIG. 7 schematically illustrates a state where when a plurality of devices output two-dimensional OSD data in a typical data transmission system where the devices are connected through a HDMI cable, the plurality of output OSD data are two-dimensionally displayed on one screen of TV in a superimposed manner. It is to be noted that OSD display refers to display of various operation menus, various types of program information of TV, and other data with, for example, GUI (Graphical User Interface). FIG. 7 illustrates an exemplary case of connection between TV as a highest-layer root device, an AV amplifier as a first hierarchy, and a player as a second hierarchy. The TV displays a two-dimensional OSD image 130A from the player, a two-dimensional OSD image 120A from the AV amplifier, and a two-dimensional OSD image 110A from the TV, which are superimposed in order from a lower-layer side so as to be in a form of a two-dimensional composite OSD image 110B. As illustrated in FIG. 7, the devices output two-dimensional OSD data, and TV displays the data in a form of the two-dimensional composite OSD image 110B. In such a case, a user can recognize the composite OSD image 110B without unpleasantness.

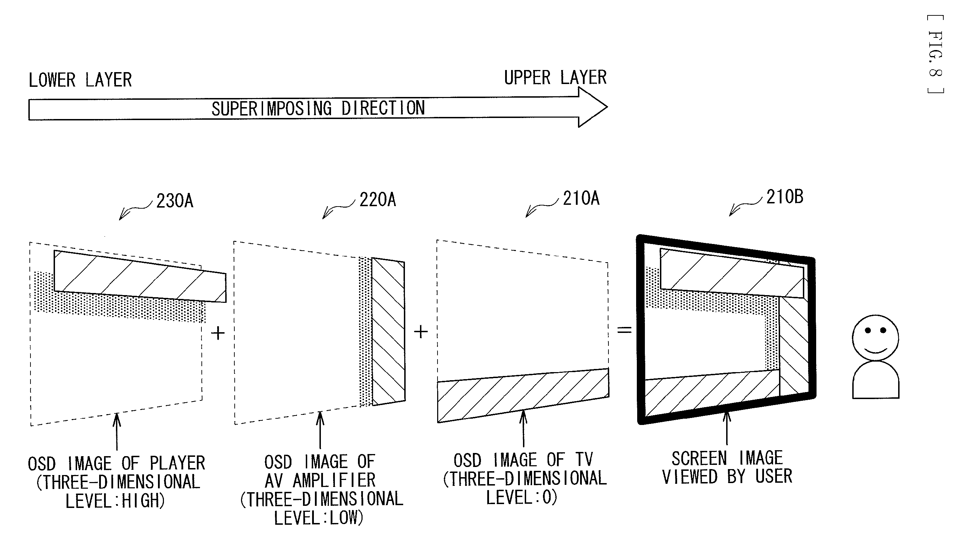

On the other hand, FIG. 8 schematically illustrates a state where when a plurality of devices output three-dimensional OSD data in a typical data transmission system where the devices are connected through a HDMI cable, the plurality of output OSD data are three-dimensionally displayed on one screen of TV in a superimposed manner. As in FIG. 7, FIG. 8 illustrates an exemplary case of connection between TV as a highest-layer root device, an AV amplifier as a first hierarchy, and a player as a second hierarchy. The TV displays a three-dimensional OSD image 230A from the player, a three-dimensional OSD image 220A from the AV amplifier, and a three-dimensional OSD image 210A from the TV, which are superimposed in order from a lower-layer side so as to be in a form of a three-dimensionally composite OSD image 210B.

As illustrated in FIG. 8, three-dimensional OSD data are output from the devices, and the TV displays the data in a form of the three-dimensional composite OSD image 210B. In such a case, if a three-dimensional level of the three-dimensional OSD image from each device is not appropriate, the composite OSD image 210B is unnaturally viewed. Here, the three-dimensional level refers to a stereoscopic effect in three-dimensional display. For example, the three-dimensional level is higher in the case where an image is seen on a relatively frontward side than in the case where an image is seen on a relatively backward side. Although the three-dimensional level for a moving image commonly varies depending on positions in a screen or on scenes, the three-dimensional level is believed to be fixed for OSD display or subtitles of a movie.

In the case where devices output three-dimensional OSD data, and if OSD data from an upper-layer device has a three-dimensional level higher than three-dimensional level of OSD data from a lower-layer device, a user can recognize the composite OSD image 210B without unpleasantness. However, for example, as illustrated in FIG. 8, if the three-dimensional level of the OSD image 230A from the player being a lower-layer device is highest, and if the three-dimensional level of the OSD image 210A from the TV being an upper-layer device is lowest, the OSD image 230A from the player being the lower-layer device is displayed on the most frontward side in the composite OSD image 210B. Such a display state leads to unnatural viewing for a user.

Although the patent literatures 1 and 2 each disclose a technique on transmission of three-dimensional image data, each literature has no description on transmission through a digital interface such as HDMI, and on the problem in the case where three-dimensional image data are output from a plurality of devices connected hierarchically as described above.

The present invention has been made in light of such problems, and an object of the invention is to provide a data transmission system, in which even if three-dimensional image data is output from each of a plurality of devices connected hierarchically, each of the three-dimensional image data is not displayed on a display means with an unnatural stereoscopic effect, but is displayed in an appropriately superimposed manner.

A data transmission system according to the invention includes a first device that outputs a first three-dimensional image data and first parallax information that is on the first three-dimensional image data; and a second device that is connected to the first device, receives the first three-dimensional image data and the first parallax information from the first device, and outputs the first three-dimensional image data and a second three-dimensional image data. In addition, the second device variably controls the second three-dimensional image data or the first three-dimensional image data based on the first parallax information and second parallax information that is on the second three-dimensional image data.
For example, the first three-dimensional image data and the second three-dimensional image data are displayed on a same display means in a superimposed manner. For example, they are each a three-dimensional OSD data.

In the data transmission system according to the invention, the first device outputs the first three-dimensional image data and the first parallax information that is on the first three-dimensional image data. The second device receives the first three-dimensional image data and the first parallax information from the first device, and outputs the first three-dimensional image data and the second three-dimensional image data. The second device variably controls the second three-dimensional image data or the first three-dimensional image data based on the first parallax information and the second parallax information that is on the second three-dimensional image data.

According to the data transmission system of the invention, the second device connected to the first device variably controls the first three-dimensional image data or the second three-dimensional image data of the own device based on the first parallax information from the first device and the second parallax information that is on the second three-dimensional image data of the own device, so that even if each of the three-dimensional image data is displayed on a display means, the three-dimensional image data can be displayed in an appropriately superimposed manner without being displayed with an unnatural stereoscopic effect.

### BRIEF DESCRIPTION OF THE DRAWINGS

[FIG. 1] FIG. 1 is a block diagram illustrating an exemplary configuration of a data transmission system according to a first embodiment of the invention.
[FIG. 2] FIG. 2 is an explanatory diagram illustrating different viewing ways between three-dimensional images due to different parallax levels.
[FIG. 3] FIG. 3 is an explanatory diagram schematically illustrating a state where when a plurality of devices output three-dimensional OSD data in the data transmission system according to the first embodiment, the plurality of output OSD data are three-dimensionally displayed on one screen in a superimposed manner.
[FIG. 4] FIG. 4 is a block diagram illustrating control operation performed when a plurality of devices output three-dimensional OSD data in the data transmission system according to the first embodiment.
[FIG. 5] FIG. 5 is a block diagram illustrating control operation performed when a plurality of devices output three-dimensional OSD data in a data transmission system according to a second embodiment.
[FIG. 6] FIG. 6 is a flowchart illustrating control operation performed when the plurality of devices output three-dimensional OSD data in the data transmission system according to the second embodiment.
[FIG. 7] FIG. 7 is an explanatory diagram schematically illustrating a state where when a plurality of devices output two-dimensional OSD data in a typical data transmission system, the plurality of output OSD data are two-dimensionally displayed on one screen in a superimposed manner.
[FIG. 8] FIG. 8 is an explanatory diagram schematically illustrating a state where when a plurality of devices output three-dimensional OSD data in the typical data transmission system, the plurality of output OSD data are three-dimensionally displayed on one screen in a superimposed manner.

### MODES FOR CARRYING OUT THE INVENTION

Hereinafter, modes for carrying out the invention will be described in detail with reference to the drawings.

### <First Embodiment>

### [System Configuration]

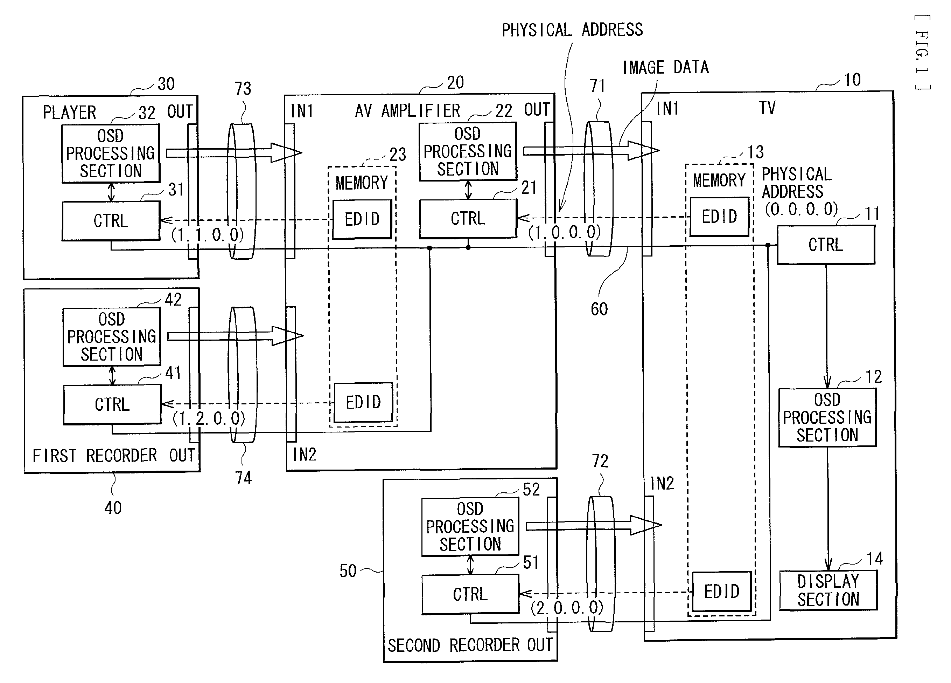

FIG. 1 illustrates an exemplary configuration of a data transmission system according to a first embodiment of the invention. In the data transmission system, a plurality of devices are connected through HDMI cables 71, 72, 73, and 74 to form a HDMI network. The plurality of devices include TV 10, an AV amplifier 20, a player 30, a first recorder 40, and a second recorder 50. The TV 10 has a first input terminal IN1 and a second input terminal IN2. The AV amplifier 20 has a first input terminal IN1, a second input terminal IN2, and one output terminal OUT. The player 30, the first recorder 40, and the second recorder 50 each have one output terminal OUT.

The first input terminal IN1 of the TV 10 is connected to the output terminal OUT of the AV amplifier 20 through the HDMI cable 71. The second input terminal IN2 of the TV 10 is connected to the output terminal OUT of the second recorder 50 through the HDMI cable 72. The first input terminal IN1 of the AV amplifier 20 is connected to the output terminal OUT of the player 30 through the HDMI cable 73. The second input terminal IN2 of the AV amplifier 20 is connected to the output terminal OUT of the first recorder 40 through the HDMI cable 74.

The HDMI cables 71, 72, 73, and 74 each include a TMDS (Transition Minimized Differential Signaling) line for digital transmission of image data output from a lower-layer device (for example, the player 30) to an upper-layer device (for example, the AV amplifier 20) in a differential manner, and a CEC line 60 for bidirectional transmission of a control signal with the CEC protocol between the devices. In addition, the HDMI cables 71, 72, 73, and 74 each include an undepicted DDC (Display Data Channel) line used for transmission of EDID (Extended Display Identification Data), for example.

In the present embodiment, the AV amplifier 20 or the TV 10 corresponds to a specific example of "second device" of the invention. Here, for example, if the AV amplifier 20 is assumed as the second device, the player 30 or the first recorder 40 corresponds to a specific example of "first device" of the invention. In addition, if the TV 10 is assumed as the second device, the AV amplifier 20 or the second recorder 50 corresponds to a specific example of "first device" of the invention.
In addition, the HDMI cable 73 corresponds to a specific example of "connection cable" of the invention. The CEC line 60 corresponds to a specific example of "control line" of the invention. In addition, for example, the TMDS line of the HDMI cable 73 corresponds to a specific example of "data line" of the invention.

The TV 10 includes CTRL 11, an OSD processing section 12, a memory 13, and a display section 14. The CTRL 11 performs transmission control of data and control of the inside of the device, and includes a controlling microcomputer. The OSD processing section 12 outputs, for example, OSD data with GUI in accordance with control by the CTRL 11. A data for OSD display is generated based on a data for OSD display (such as a data for an operation menu) beforehand stored in a predetermined storage region in the OSD processing section 12 or the TV 10, for example. The data for OSD display may further include, for example, an EPG (Electronic Program Guide) data acquired during broadcast reception. The memory 13 is a rewritable nonvolatile memory, and stores device information of the TV 10 and/or other information as EDID (Enhanced Extended Display Identification Data). The display section 14 is a display panel such as, for example, a liquid crystal panel and an organic EL (Electro-Luminescence) panel. The display section 14 displays an image based on an image data received through broadcast, an OSD data output from the internal OSD processing section 12, an image data output from another device, or other data. Switching control of the image displayed on the display section 14 is performed by the CTRL 11 according to an operational instruction from an undepicted remote control or the like, for example.

The AV amplifier 20 includes CTRL 21, an OSD processing section 22, and a memory 23. The CTRL 21 performs transmission control of data and control of the inside of the device, and includes a controlling microcomputer. The OSD processing section 22 outputs an OSD data in accordance with control by the CTRL 21. A data for OSD display is generated based on a data for OSD display (such as a data for an operation menu) beforehand stored in a predetermined storage region in the OSD processing section 22 or the AV amplifier 20, for example. The memory 23 is a rewritable nonvolatile memory, and stores device information of the AV amplifier 20 and/or other information as EDID. The AV amplifier 20 outputs an OSD data output from the internal OSD processing section 22, image data output from another device, or the like to the TV 10 through the HDMI cable 71. Switching control of the image data to be output is performed by the CTRL 21 according to an operational instruction from an undepicted remote control or the like, for example.

The player 30 is a reproduction device such as a DVD player, for example. The player 30 includes CTRL 31 and an OSD processing section 32. The CTRL 31 performs transmission control of data and control of the inside of the device, and includes a controlling microcomputer. The OSD processing section 32 outputs an OSD data in accordance with control by the CTRL 31. A data for OSD display is generated based on a data for OSD display (such as a data for an operation menu) beforehand stored in a predetermined storage region in the OSD processing section 32 or the player 30, for example. The player 30 outputs an OSD data output from the internal OSD processing section 32, or image data output from a recording medium such as DVD to the AV amplifier 20 through the HDMI cable 73. Switching control of the image data to be output is performed by the CTRL 31 according to an operational instruction from an undepicted remote control or the like, for example.

The first recorder 40 is a recording-reproduction device such as a DVD recorder and a HDD (Hard disk drive) recorder, for example. The first recorder 40 includes CTRL 41 and an OSD processing section 42. The CTRL 41 performs transmission control of data and control of the inside of the device, and includes a controlling microcomputer. The OSD processing section 42 outputs an OSD data in accordance with control by the CTRL 41. A data for OSD display is generated based on a data for OSD display (such as a data for an operation menu) beforehand stored in a predetermined storage region in the OSD processing section 42 or the first recorder 40, for example. The first recorder 40 outputs an OSD data output from the internal OSD processing section 42, or an image data output from a recording medium such as DVD to the AV amplifier 20 through the HDMI cable 74. Switching control of the image data to be output is performed by the CTRL 41 according to an operational instruction from an undepicted remote control or the like, for example.

The second recorder 50 is a recording-reproduction device such as a DVD recorder and a HDD recorder, for example. The second recorder 50 includes CTRL 51 and an OSD processing section 52. The CTRL 51 performs transmission control of data and control of the inside of the device, and includes a controlling microcomputer. The OSD processing section 52 outputs an OSD data in accordance with control by the CTRL 51. A data for OSD display is generated based on a data for OSD display (such as a data for an operation menu) beforehand stored in a predetermined storage region in the OSD processing section 52 or the second recorder 50, for example. The second recorder 50 outputs an OSD data output from the internal OSD processing section 52, or an image data output from a recording medium such as DVD to the TV 10 through the HDMI cable 72. Switching control of the image data to be output is performed by the CTRL 51 according to an operational instruction from an undepicted remote control or the like, for example.

### [Mutual Recognition between Devices]

In this data transmission system, with the TV 10 as a highest-layer root device, other devices are hierarchically connected through HDMI connection. Mutual recognition between the devices is performed with the CEC protocol according to the HDMI standard. In addition, a physical address is set for each device.

Although the physical address is uniquely set in the HDMI network, if an external device is added to or separated from the HDMI network, the physical address is automatically adjusted. The physical address is expressed in an address format of (n. n. n. n). If a hierarchy of an external device directly connected to the TV 10 is assumed as a first hierarchy, an external device connected to the first hierarchy device corresponds to a second hierarchy, and the hierarchy number increases as the distance increases from the TV 10. In addition, the physical address is expressed in such a manner that the hierarchy number increases with increment of n from the left end to the right in the address format of (n. n. n. n).

The TV 10 as the root device has a physical address of (0. 0. 0. 0). In the case where two external devices are directly connected to the TV 10, a physical address of a first external device (the AV amplifier 20) is expressed as (1. 0. 0. 0), and a physical address of a second external device (the second recorder 50) is expressed as (2. 0. 0. 0). In addition, for example, if two external devices (the player 30 and the first recorder 40) are connected to the first external device, the physical addresses are expressed as (1. 1. 0. 0) and (1. 2. 0. 0), respectively.

For example, a flow of setting of the physical addresses for the AV amplifier 20 and the player 30 in FIG. 1 is as follows. The TV 10 having no HDMI output terminal OUT has a physical address of (0. 0. 0. 0) as the root device. The TV 10 sets (1. 0. 0. 0) as a physical address for a device connected to the first input terminal IN1 to EDID of the first input terminal IN1 of the own device in accordance with the physical address assignment rule of HDMI, and states EDID read permission.

The AV amplifier 20 connected to the first input terminal IN1 of the TV 10 reads the EDID of the first input terminal IN1 of the TV 10 in response to the permission statement by the TV 10, and understands assignment of the physical address (1. 0. 0. 0) to the own device.

The AV amplifier 20 sets (1. 1. 0. 0) as a physical address for a device connected to the first input terminal IN1 of the own device to EDID of the first input terminal IN1 of the own device, and states EDID read permission. In addition, the AV amplifier 20 sets (1. 2. 0. 0) as a physical address for a device connected to the second input terminal IN2 of the own device. The AV amplifier 20 states EDID read permission to the first input terminal IN1 to which the player 30 is connected.

The player 30 connected to the first input terminal IN1 of the AV amplifier 20 reads the EDID of the AV amplifier 20 in response to the permission statement by the AV amplifier 20, and understands assignment of the physical address (1. 1. 0. 0) to the own device.

It is to be noted that, although the description is omitted, logical addresses are set to define a category of each device after the physical addresses are set.

### [Three-Dimensional Level of Three-Dimensional Display]

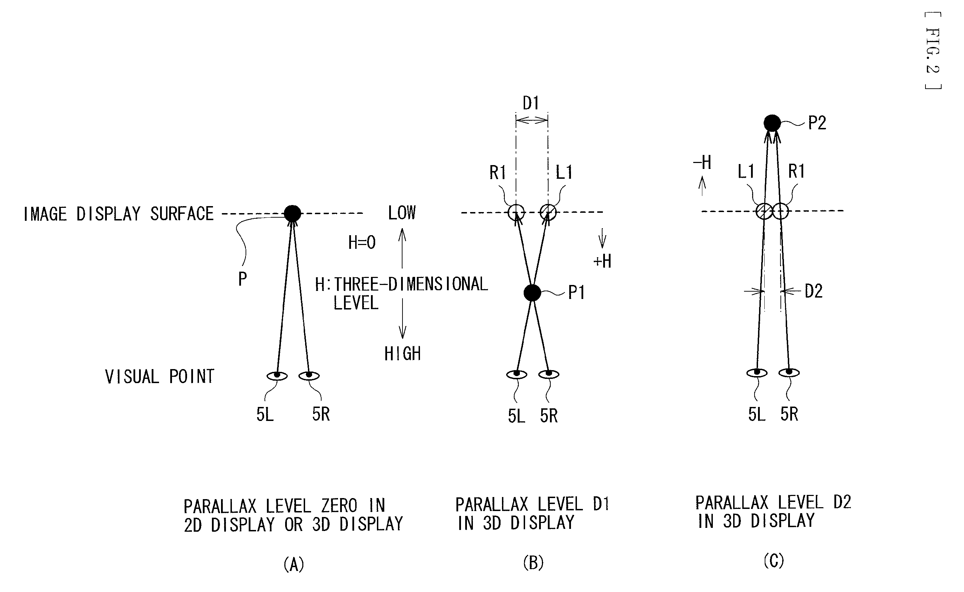

In this data transmission system, a three-dimensional image data is variably controlled such that even if three-dimensional image data is output from each of a plurality of devices connected hierarchically, each of the three-dimensional image data is not displayed on a display means (the display section 14 of the TV 10) with an unnatural stereoscopic effect, but is displayed in an appropriately superimposed manner. Before describing such a method of variable control, description is made on the three-dimensional level (a stereoscopic effect or a sense of depth) in the case of performing three-dimensional display with reference to (A) to (C) of FIG. 2.

(A) to (C) of FIG. 2 schematically illustrate a relationship between display positions of stereoscopic parallax images (a left-eye image L1 and a right-eye image R1) and stereoscopic vision. A three-dimensional (3D) image is differently viewed depending on a difference in parallax level. In (A) of FIG. 2, a viewer views the same pixel position on an image surface (image display surface) by his/her left eye 5L and right eye 5R. In other words, the left-eye image L1 and the right-eye image R1 are at the same pixel position, resulting in a parallax level of zero, which is substantially the same as two-dimensional (2D) display. In this case, the display image has no parallax, so that the viewer views a real image P. On the other hand, (B) and (C) of FIG. 2 each illustrate a case where the left-eye image L1 and the right-eye image R1 are displayed with parallax.

In (B) of FIG. 2, the right-eye image R1 is located on the left side with respect to the left-eye image L1 on an image display surface. The left-eye image L1 and the right-eye image R1 have a parallax level D1 therebetween. In the case of (B) of FIG. 2, a viewer stereoscopically views an image in a manner of viewing a virtual image P1 on a frontward side with respect to the image display surface.

In (C) of FIG. 2, positions of left and right images are different from those in the case of (B) of FIG. 2. Specifically, in (C) of FIG. 2, the right-eye image R1 is located on the right side with respect to the left-eye image L1 on an image display surface. The left-eye image L1 and the right-eye image R1 have a parallax level D2 therebetween. In the case of (C) of FIG. 2, a viewer stereoscopically views an image in a manner of viewing a virtual image P2 on a backward side with respect to the image display surface.

In the present embodiment, the state of (A) of FIG. 2 (a state of a parallax level of zero) is defined as a three-dimensional level H=0. In addition, the state of (B) of FIG. 2 is defined as a + (plus) side of the three-dimensional level H, and the state of (C) of FIG. 2 is defined as a - (minus) side of the three-dimensional level H. In this definition, an image is viewed more frontward with an increase in a value of the three-dimensional level H. The three-dimensional level H is high (large) in an image viewed on a relatively frontward side compared with an image viewed on a relatively backward side. In other words, the three-dimensional level H is low (small) in an image viewed on a relatively backward side compared with an image viewed on a relatively frontward side.

### [Control Operation of Three-Dimensional Image Data (OSD Data)]

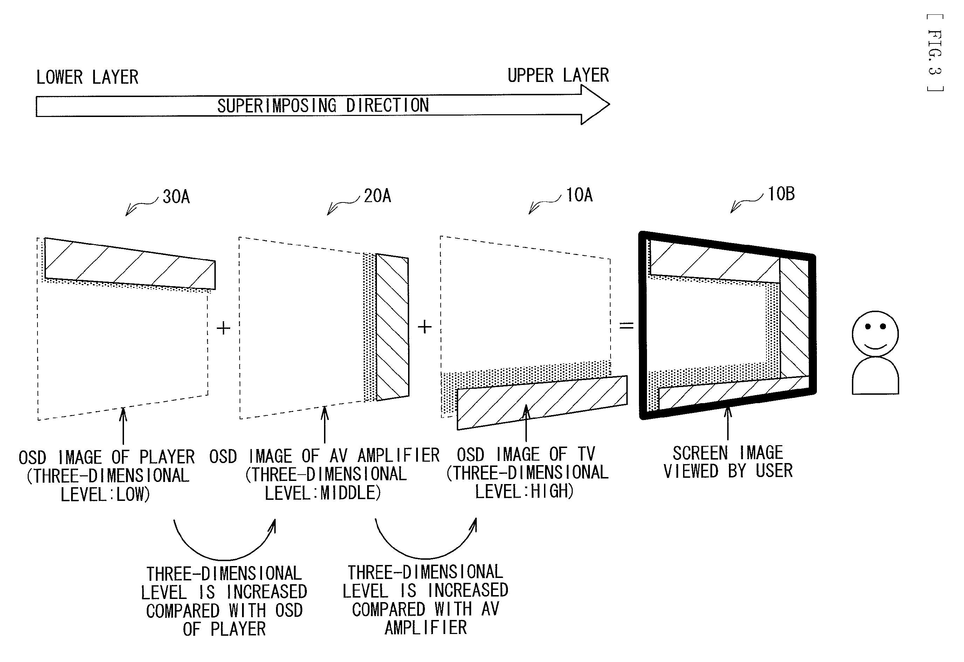

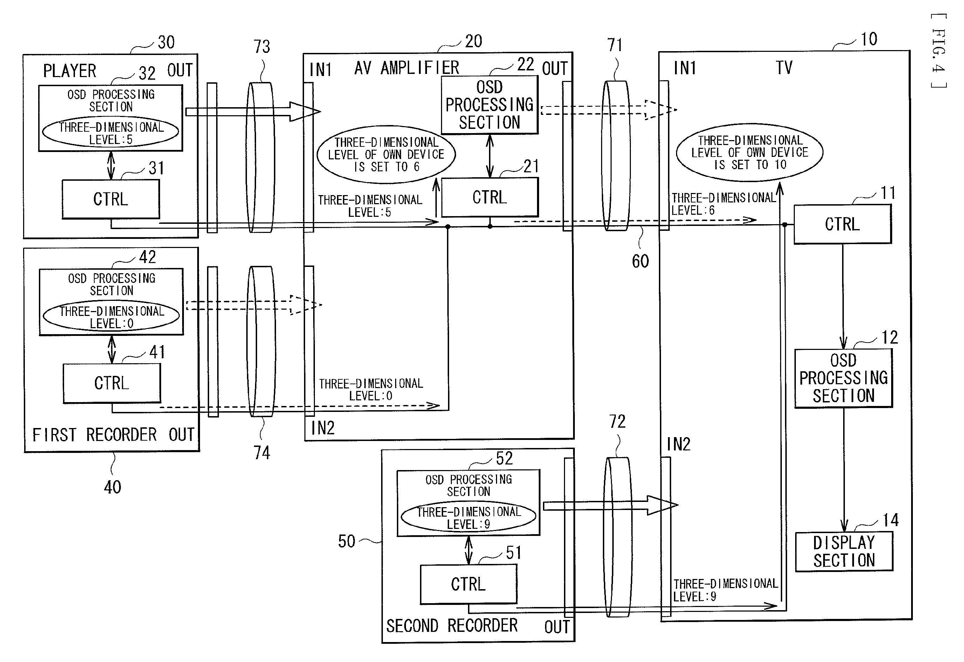

Next, control operation of a three-dimensional image data in the data transmission system is described with reference to FIGs. 3 and 4. In the present embodiment, description is made on an exemplary case where an OSD data is a three-dimensional image data.

FIG. 3 schematically illustrates a state where when a plurality of devices output three-dimensional OSD data in the data transmission system, the plurality of output OSD data are three-dimensionally displayed on one screen of the TV 10 in a superimposed manner. FIG. 3 illustrates an exemplary case where OSD data output from the TV 10 as a highest-layer root device, the AV amplifier 20 as a first hierarchy, and the player 30 as a second hierarchy are displayed in a superimposed manner. The display section 14 of the TV 10 displays a three-dimensional OSD image 30A from the player 30, a three-dimensional OSD image 20A from the AV amplifier 20, and a three-dimensional OSD image 10A from the TV 10, which are superimposed in order from a lower layer side so as to be in a form of a three-dimensional composite OSD image 10B.

In the case where each device outputs a three-dimensional OSD data, and if an OSD data from an upper-layer device is kept to have a three-dimensional level higher than a three-dimensional level of OSD data from a lower-layer device, a user can recognize the composite OSD image 10B without unpleasantness. Specifically, control is performed such that an OSD image 30A from the player 30 as the lowest layer has a lowest three-dimensional level, and an OSD image 10A from the TV 10 as the highest layer has a highest three-dimensional level. To perform this control, a lower-layer device outputs a data indicating the three-dimensional level H to an upper-layer device through the CEC line 60. Since the three-dimensional level H is determined depending on a parallax level as described above, for example, a data (parallax information) indicating the parallax level is output as a data indicating the three-dimensional level H.

An upper-layer device (second device), therefore, variably controls the three-dimensional level H (parallax level) of an OSD data (second three-dimensional image data) of the own device based on a data (first parallax information) indicating the three-dimensional level H from a lower-layer device (first device) and a data (second parallax information) indicating the three-dimensional level H of the own device. More specifically, the upper-layer device (second device) performs variable control of the parallax level of the OSD data of the own device, such that in the case where the OSD data (first three-dimensional image data) from the lower-layer device (first device) and the OSD data (second three-dimensional image data) of the own device (second device) are displayed on the same display means in a superimposed manner, the three-dimensional image based on the OSD data of the own device is displayed and viewed on a frontward side compared with the three-dimensional image based on the OSD data from the lower-layer device.

FIG. 4 schematically illustrates a specific example in the case of performing such variable control. In this example, the three-dimensional level of the OSD data generated by the OSD processing section 32 of the player 30 is 5. In addition, the three-dimensional level of the OSD data generated by the OSD processing section 42 of the first recorder 40 is 0. In addition, the three-dimensional level of the OSD data generated by the OSD processing section 52 of the second recorder 50 is 9.

The CTRL 31 of the player 30 notifies the CTRL 21 of the AV amplifier 20 as an upper-layer device of the data of the three-dimensional level through the CEC line 60. The CTRL 41 of the first recorder 40 similarly notifies the CTRL 21 of the AV amplifier 20 as an upper-layer device of the data of the three-dimensional level through the CEC line 60. The CTRL 51 of the second recorder 50 notifies the CTRL 11 of the TV 10 as an upper-layer device of the data of the three-dimensional level through the CEC line 60.

For example, when the CTRL 21 of the AV amplifier 20 is notified of the three-dimensional level of 5 from the player 30, the CTRL 21 controls the OSD processing section 22 such that the three-dimensional level of the OSD data of the own device becomes larger than 5. In this case, the OSD processing section 22 generates and outputs an OSD data of 6, of which the three-dimensional level is increased by 1, for example. In addition, the CTRL 21 of the AV amplifier 20 notifies the CTRL 11 of the TV 10 as an upper-layer device of the data of the three-dimensional level through the CEC line 60.

For example, when the CTRL 11 of the TV 10 is notified of the three-dimensional level of 9 from the second recorder 50, the CTRL 11 controls the OSD processing section 12 such that the three-dimensional level of the OSD data of the own device becomes larger than 9. In this case, the OSD processing section 12 generates and outputs an OSD data of 10, of which the three-dimensional level is increased by 1, for example.

As described above, according to the data transmission system of the first embodiment, the OSD data is variably controlled such that an OSD data from an upper-layer device is kept to have a three-dimensional level higher than a three-dimensional level of an OSD data from a lower-layer device, so that even if each of the three-dimensional image data is displayed on a display means, the three-dimensional image data can be displayed in an appropriately superimposed manner without being displayed with an unnatural stereoscopic effect.

In this way, the OSD data of a plurality of devices are displayed in a superimposed manner with GUI, thereby the plurality of devices can be three-dimensionally operated, for example. For example, a cursor for selection and instruction is displayed on the screen of the TV 10 and is moved in a Z-axis direction (direction perpendicular to the screen), enabling operation of an operation menu for any device and/or the like, for example. This enables intuitive operation depending on a connection hierarchy of devices, such as operation of the operation menu of the TV 10 when the cursor is moved to the most frontward side, and operation of the operation menu of the player 30 when the cursor is moved to the most backward side, for example.

### <Second Embodiment>

Next, a data transmission system according to a second embodiment of the invention is described.
The basic configuration of the data transmission system of the present embodiment is similar to that illustrated in FIG. 1. The data transmission system of the present embodiment, however, is different from the first embodiment described above in control operation of a three-dimensional image data (OSD data).

Although an upper-layer device (second device) variably controls the three-dimensional level H (parallax level) of the OSD data of the own device in the first embodiment described above, the three-dimensional level H itself is not varied in the present embodiment. In the present embodiment, an OSD data (second three-dimensional image data) of own device is controlled to be output or not output based on a data (first parallax information) indicating a three-dimensional level H from a lower-layer device (first device) and a data (second parallax information) indicating a three-dimensional level H of the own device.

More specifically, in the case where the OSD data (first three-dimensional image data) from the lower-layer device (first device) and the OSD data (second three-dimensional image data) of the own device (second device) are displayed on the same display means in an superimposed manner, and if the three-dimensional image based on the OSD data of the own device is to be displayed and viewed on a frontward side compared with the three-dimensional image based on the OSD data from the lower-layer device (the three-dimensional level of the own device is higher than that of the lower-layer device), both the OSD data from the lower-layer device and the OSD data of the own device are output. Moreover, control is performed such that if the three-dimensional image based on the OSD data of the own device is to be displayed and viewed on a backward side compared with the three-dimensional image based on the OSD data from the lower-layer device (if the three-dimensional level of the own device is lower than that of the lower-layer device), control is performed such that the OSD data of the own device is not output, and only the OSD data from the lower-layer device is output.

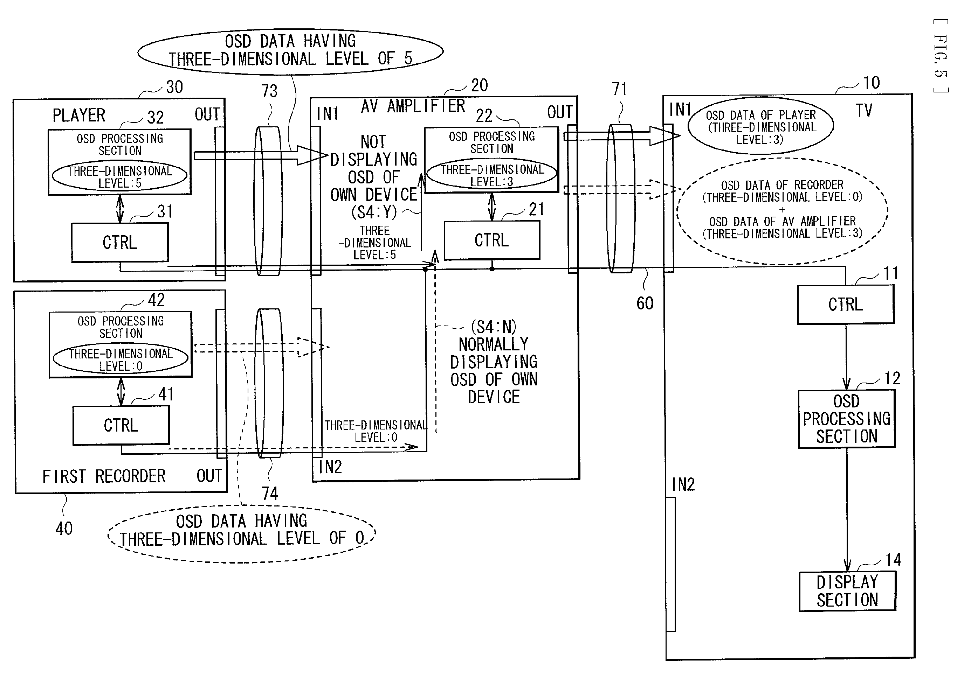

FIG. 5 schematically illustrates a specific example in the case of performing such variable control. In this example, a three-dimensional level of an OSD data generated by the OSD processing section 32 of the player 30 is 5. In addition, a three-dimensional level of an OSD data generated by the OSD processing section 42 of the first recorder 40 is 0. In addition, a three-dimensional level of an OSD data generated by the OSD processing section 22 of the AV amplifier 20 is 3.

The CTRL 31 of the player 30 outputs the OSD data generated by the OSD processing section 32 to the AV amplifier 20 as an upper-layer device through the data transmission line (TMDS line) of the HDMI cable 73. At the same time, the CTRL 31 notifies the CTRL 21 of the AV amplifier 20 as the upper-layer device of the data of the three-dimensional level through the CEC line 60.

Similarly, the CTRL 41 of the first recorder 40 outputs the OSD data generated by the OSD processing section 42 to the AV amplifier 20 as an upper-layer device through the data transmission line (TMDS line) of the HDMI cable 74. At the same time, the CTRL 41 notifies the CTRL 21 of the AV amplifier 20 as the upper-layer device of the data of the three-dimensional level through the CEC line 60.

In the case where the CTRL 21 of the AV amplifier 20 transmits the OSD data from the player 30, the CTRL 21 performs control such that the OSD data of the own device is not output and only the OSD data from the player 30 is transmitted to the TV 10, since a three-dimensional level of the own device is lower. On the other hand, in the case where the CTRL 21 of the AV amplifier 20 transmits the OSD data from the first recorder 40, the CTRL 21 performs control such that both the OSD data of the own device and the OSD data from the player 30 are transmitted to the TV 10, since the three-dimensional level of the OSD data of the own device is higher.

Furthermore, for example, assuming that the AV amplifier 20 is "second device", the player 30 is "first device", and the TV 10 is "third device", the second device controls the OSD data (second three-dimensional image data) of the own device to be output or not output in consideration of not only the data (first parallax information) indicating the three-dimensional level H from the lower-layer device (first device) but also the data (third parallax information) indicating the three-dimensional level H from the upper-layer device (third device).

More specifically, in the case where the OSD data (third three-dimensional image data) from the upper-layer device (third device) and the OSD data (second three-dimensional image data) of the own device (second device) are displayed on the same display means in an superimposed manner, and if the three-dimensional image based on the OSD data from the upper-layer device is to be displayed and viewed on a frontward side compared with the three-dimensional image based on the OSD data of the own device (the three-dimensional level of the own device is lower than that of the upper-layer device), the OSD data of the own device is output. In addition, if the three-dimensional image based on the OSD data from the upper-layer device is to be displayed and viewed on a backward side compared with the three-dimensional image based on the OSD data of the own device (the three-dimensional level of the own device is higher than that of the upper-layer device), control is performed such that the OSD data of the own device is not output.

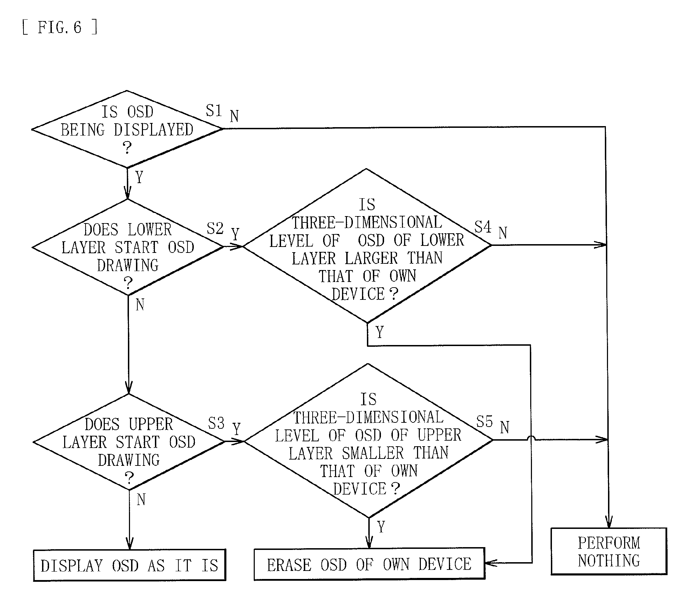

FIG. 6 illustrates an example of processing operation in the case of performing such variable control. It is to be noted that the processing operation illustrated in FIG. 6 is an example of processing operation performed by the CTRL 21 of the AV amplifier 20. If the OSD data of the own device is not displayed (step S1: N), the AV amplifier 20 performs no processing operation of the OSD data of the own device. If the OSD data of the own device is displayed (step S1: Y), the AV amplifier 20 continuously monitors whether the lower-layer device (for example, the player 30) starts drawing of the OSD data. If the lower-layer device starts drawing of the OSD data (step S2: Y), the AV amplifier 20 further determines whether the three-dimensional level of the OSD data of that lower-layer device is larger than the three-dimensional level of the OSD data of the own device (step S4). If the three-dimensional level of the OSD data of the lower-layer device is not larger than the three-dimensional level of the OSD data of the own device (step S4: N), the AV amplifier 20 performs no variable control of the OSD data of the own device in particular. If the three-dimensional level of the OSD data of the lower-layer device is larger than the three-dimensional level of the OSD data of the own device (step S4: Y), the AV amplifier 20 does not output the OSD data of the own device, but allows it to be erased from a screen of a display means.

On the other hand, if the OSD data of the own device is displayed (step S1: Y), and if the lower-layer device does not start drawing of the OSD data (step S2: N), the AV amplifier 20 further continuously monitors whether an upper-layer device (TV 10) starts drawing of the OSD data (step S3). Then, if the upper-layer device does not start drawing of the OSD data (step S3: N), the AV amplifier 20 outputs the OSD data of the own device as it is so as to allow the OSD data to be displayed as it is on the screen of the display means.

If the upper-layer device starts drawing of the OSD data (step S3: Y), the AV amplifier 20 further determines whether the three-dimensional level of the OSD data of the upper-layer device is smaller than the three-dimensional level of the OSD data of the own device (step S5). If the three-dimensional level of the OSD data of the upper-layer device is not smaller than the three-dimensional level of the OSD data of the own device (step S5: N), the AV amplifier 20 performs no variable control of the OSD data of the own device in particular. If the three-dimensional level of the OSD data of the upper-layer device is smaller than the three-dimensional level of the OSD data of the own device (step S5: Y), the AV amplifier 20 does not output the OSD data of the own device, but allows it to be erased from the screen of the display means.

As described above, according to the data transmission system of the second embodiment, in the case where a connected device which is lower in layer than the own device performs OSD display at a three-dimensional level larger than a three-dimensional level of an OSD data of the own device, the OSD data of the own device is not displayed. This makes it possible to prevent a situation where the OSD data of the own device and the OSD data of the lower-layer device are three-dimensionally displayed in an unnaturally superimposed manner.

In addition, in the case where a connected device which is higher in layer than the own device performs OSD display at a three-dimensional level smaller than a three-dimensional level of an OSD data of the own device, the OSD data of the own device is not displayed. This makes it possible to prevent a situation where the OSD data of the own device and the OSD data of the upper-layer device are three-dimensionally displayed in an unnaturally superimposed manner. In the past, irrespective of the three-dimensional level, OSD of an upper-layer device is simply superimposed to OSD of a lower-layer device, and therefore design of GUI for OSD is restricted to avoid three-dimensionally unnatural display. In the present embodiment, OSD is controlled to be displayed or not displayed depending on three-dimensional levels, allowing restrictions on design of GUI to be eliminated.

### <Other Embodiments>

The present invention is not limited to each of the above-described embodiments, and various modifications may be made.
For example, although each of the embodiments described above has been described with three-dimensional display of OSD as an example, the invention may be applied to a case where an image data other than OSD is three-dimensionally displayed.

In addition, in the first embodiment described above, as illustrated in FIG. 3, the control is performed such that OSD data of the AV amplifier 20 and the TV 10 on an upper layer side with respect to the player 30 being the lowest-layer device are sequentially displayed more frontward at a higher three-dimensional level with the three-dimensional level of the OSD data of the player 30 as a reference point, for example. However, for example, control may be performed with the three-dimensional level of the OSD data of the TV 10 being the highest-layer device as a reference point. For example, control may be performed such that OSD data of the AV amplifier 20 and the player 30 on a lower layer side with respect to the TV 10 being the highest-layer device are sequentially displayed more backward at a lower three-dimensional level with the three-dimensional level of the OSD data of the TV 10 as a reference point. In this case, an upper-layer device (second device) variably controls a three-dimensional level H (parallax level) of an OSD data (first three-dimensional image data) of a first device based on a data (first parallax information) indicating the three-dimensional level H from a lower-layer device (first device) and a data (second parallax information) indicating a three-dimensional level H of the own device. More specifically, in the case where the OSD data (first three-dimensional image data) from the lower-layer device (first device) and the OSD data (second three-dimensional image data) of the own device (second device) are displayed on the same display means in an superimposed manner, the upper-layer device (second device) performs variable control of the parallax level of the OSD data of the lower-layer device such that the three-dimensional image based on the OSD data from the lower-layer device is displayed and viewed on a backward side compared with the three-dimensional image based on the OSD data of the own device.

## Claims

1. A data transmission system, comprising:
a first device outputting first three-dimensional image data and first parallax information, the first parallax information being on the first three-dimensional image data; and
a second device being connected to the first device, receiving the first three-dimensional image data and the first parallax information from the first device, and outputting the first three-dimensional image data and a second three-dimensional image data,
wherein the second device variably controls the second three-dimensional image data or the first three-dimensional image data based on the first parallax information and second parallax information, the second parallax information being on the second three-dimensional image data.

2. The data transmission system according to claim 1, wherein the first three-dimensional image data and the second three-dimensional image data are displayed on a same display means in a superimposed manner.

3. The data transmission system according to claim 1, wherein the second device variably controls a parallax level of the second three-dimensional image data or the first three-dimensional image data based on the first parallax information and the second parallax information.

4. The data transmission system according to claim 3, wherein the second device variably controls the parallax level of the second three-dimensional image data to allow, when the first three-dimensional image data and the second three-dimensional image data are displayed on a same display means in a superimposed manner, a three-dimensional image based on the second three-dimensional image data is displayed and viewed on a frontward side compared with a three-dimensional image based on the first three-dimensional image data.

5. The data transmission system according to claim 1, wherein the second device controls the second three-dimensional image data to be outputted or not outputted based on the first parallax information and the second parallax information.

6. The data transmission system according to claim 5, wherein, when the first three-dimensional image data and the second three-dimensional image data are displayed on a same display means in a superimposed manner, the second device performs control
to allow both the first three-dimensional image data and the second three-dimensional image data to be outputted if a three-dimensional image based on the second three-dimensional image data is to be displayed and viewed on a frontward side compared with a three-dimensional image based on the first three-dimensional image data, and
to allow the second three-dimensional image data not to be outputted and only the first three-dimensional image data to be outputted if the three-dimensional image based on the second three-dimensional image data is to be displayed and viewed on a backward side compared with the three-dimensional image based on the first three-dimensional image data.

7. The data transmission system according to claim 5, further comprising a third device being connected to the second device, receiving the first three-dimensional image data through the second device, receiving the second three-dimensional image data from the second device, outputting the first three-dimensional image data and the second three-dimensional image data, and outputting a third three-dimensional image data,
wherein the second device further acquires third parallax information on the third three-dimensional image data from the third device, and controls the second three-dimensional image data to be outputted or not outputted based on the first parallax information, the second parallax information, and the third parallax information.

8. The data transmission system according to claim 7, wherein, when the second three-dimensional image data and the third three-dimensional image data are displayed on a same display means in a superimposed manner, the second device performs control
to allow the second three-dimensional image data to be outputted if a three-dimensional image based on the third three-dimensional image data is to be displayed and viewed on a frontward side compared with a three-dimensional image based on the second three-dimensional image data, and
to allow the second three-dimensional image data not to be outputted if the three-dimensional image based on the third three-dimensional image data is to be displayed and viewed on a backward side compared with the three-dimensional image based on the second three-dimensional image data.

9. The data transmission system according to any one of claims 1 to 8, further comprising a connection cable connecting the first device and the second device,
wherein the connection cable includes:
a data line allowing the first three-dimensional image data to be transmitted; and
a control line allowing a control data including the first parallax information to be transmitted.

10. The data transmission system according to claim 9, wherein
the connection cable is a connection cable according to the HDMI standard, and the control line is a CEC line according to the HDMI standard.
